# FASCICULE DE BREVET EUROPEEN

(11) **EP 3 408 480 B1**
(45) Date de publication et mention de la délivrance du brevet: **25.12.2019**
(21) Numéro de dépôt: 17706290.8
(22) Date de dépôt: 26.01.2017
(51) Int. Cl.: E05B 79/20, F16C 1/10

(54) **CÂBLE POUR SERRURE D'OUVRANT DE VÉHICULE AUTOMOBILE**
KABEL FÜR KRAFTFAHRZEUGTÜRSCHLOSS
CABLE FOR MOTOR VEHICLE DOOR LOCK

(30) Priorité: 28.01.2016 FR 1650692
(43) Date de publication de la demande: 05.12.2018
(73) Titulaire: U-Shin France, 94000 Créteil (FR)
(72) Inventeur: DEBLOCK, Luc, 94000 Creteil (FR)
(74) Mandataire: Verriest, Philippe
(86) Numéro de dépôt international: PCT/FR2017/050175
(87) Numéro de publication internationale: WO 2017/129905

(56) Documents cités:
- WO-A1-2004/001239
- WO-A1-2013/093085
- GB-A- 2 263 724

## Description

L'invention concerne un câble pour serrure destinée à ouvrir et à verrouiller un ouvrant d'un véhicule automobile. Ce type de câble comprend notamment des câbles de transmission et de liaison aux poignées permettant d'actionner la serrure pour ouvrir l'ouvrant. Par « câble de serrure » on entend notamment un ensemble comprenant par exemple un câble d'ouverture et un câble de verrouillage de l'ouvrant.

L'invention concerne en outre une serrure de véhicule automobile recevant le câble selon l'invention, et un ensemble d'ouverture et de verrouillage ainsi qu'un véhicule automobile correspondants.

Les serrures selon l'art antérieur comprennent généralement un boîtier fixé à une pièce de montage permettant de monter un câble de serrure de véhicule automobile. Chaque câble est associé à un levier prévu dans le boitier. Le câble comprend une gaine de câble et un cœur de câble se terminant par un embout de câble à chaque extrémité de la gaine. L'extrémité de la gaine est fixée à une pièce de montage, appelée aussi « embout de gaine », et la pièce de montage loge l'embout de câble.

Dans les serrures de l'art antérieur, un opérateur place la pièce de montage près du boitier, positionne l'embout de câble dans le levier, et associe ces deux pièces sous contrôle visuel de sorte qu'elles coopèrent ensemble pour le fonctionnement de la serrure avant de refermer complètement la pièce de montage sur le boitier de la serrure. Une telle serrure est par exemple connue de WO 2013/093085 A1.

Le montage des serrures de l'art antérieur présente l'inconvénient de nécessiter des manipulations fastidieuses sur une chaine de montage de serrure ce qui prolonge les temps de montage et augmente les coûts de montage.

En outre, il s'avère nécessaire de monter les serrures chez un fournisseur de pièces et de livrer une serrure montée chez un constructeur de véhicule automobile pour ne pas ralentir les chaines de montage de véhicule. La serrure montée peut être endommagée par des chocs ou des vibrations subis lors de son transport jusqu'à la chaine de montage de véhicule. Le transport doit donc être adapté ce qui augmente les coûts de transport.

De plus les câbles de transmission et de liaison aux poignées sont longs et ne peuvent pas être pliés sans détérioration. Il en résulte que fournir une serrure pré-équipée de ses câbles de transmission nécessite un conditionnement lors du transport particulièrement encombrant et peu économique.

L'invention vise à proposer un câble et une serrure dont le montage est simplifié et les temps de montage sont diminués par rapport à l'art antérieur, de sorte à diminuer les coûts de montage.

Pour ce faire est proposé un câble pour une serrure destinée à ouvrir et à verrouiller un ouvrant d'un véhicule automobile, le câble comprenant une gaine de câble et un cœur de câble logé mobile dans la gaine, le cœur de câble se terminant par un embout de câble à au moins une extrémité de la gaine,
le câble comprenant en outre une pièce de montage fixée à ladite extrémité de la gaine,
la pièce de montage logeant l'embout de câble,
dans lequel l'embout de câble est monté mobile entre
- une position de livraison dans laquelle l'embout de câble est disposé dans une zone de livraison à une première distance de ladite extrémité de la gaine, et
- une position de fonctionnement dans laquelle l'embout de câble est disposé dans une zone de fonctionnement à une deuxième distance de ladite extrémité de la gaine,
et dans lequel la pièce de montage comprend en outre un moyen de maintien de l'embout de câble dans la position de livraison.

Avantageusement, le câble selon l'invention prévoit un maintien de l'embout de câble dans la position de livraison, ce qui permet de préserver la position de l'embout de câble des vibrations subies lors du transport jusqu'à la chaine de construction. Le câble, livré séparément de la serrure, selon l'invention permet donc de limiter les coûts de transport.

En outre, une désactivation du moyen de maintien permet d'associer le câble au boîtier de la serrure en faisant coopérer l'embout de câble et le levier correspondant. Le câble selon l'invention présente donc un montage simplifié avec des coûts de montage limités.

Suivant des modes de réalisation préférés, le câble selon l'invention comprend une ou plusieurs des caractéristiques suivantes, prises séparément ou en combinaison :
- l'embout de câble est en outre monté mobile vers ou depuis une position de montage dans laquelle l'embout de câble est disposé dans une zone de montage à une autre distance de ladite extrémité de la gaine, de sorte que la deuxième distance, correspondant à une position de fonctionnement, est comprise entre la première distance, correspondant à une position de livraison, et l'autre distance, correspondant à une position de montage ; et/ou
- le moyen de maintien comprend une lame de maintien ; et/ou
- l'embout de câble est monté mobile en translation entre lesdites positions ; et/ou
- la pièce de montage comprend un moyen de guidage de l'embout de câble dans la zone de fonctionnement (c) ; et/ou
- le moyen de guidage est un rail de guidage coopérant avec l'embout de câble ; et/ou
- le câble est monté de sorte qu'en position de livraison, l'embout de câble est disposé à une première distance supérieure à la deuxième distance de la position de fonctionnement ; et/ou
- le câble est monté de sorte qu'en position de livraison, l'embout de câble est disposé à une première distance inférieure à la deuxième distance de la position de fonctionnement ; et/ou
- le câble est configuré de sorte qu'un déplacement de l'embout de câble permet de désactiver le moyen de maintien et de déplacer l'embout de câble de la position de livraison à la position de fonctionnement ; et/ou
- le câble est configuré de sorte qu'une traction du cœur de câble permet de désactiver le moyen de maintien et de déplacer l'embout de câble de la position de livraison à la position de fonctionnement.

L'invention concerne en outre une serrure pour ouvrir et verrouiller un ouvrant d'un véhicule automobile comprenant un boîtier destiné à recevoir le câble selon l'invention,
le boîtier et le câble comprenant des moyens d'attache pour fixer le boitier et le câble,
le boîtier comprenant un levier configuré pour coopérer avec l'embout de câble lorsque le boitier est attaché au câble par l'intermédiaire des moyens d'attache.

Suivant des modes de réalisation préférés, la serrure selon l'invention comprend une ou plusieurs des caractéristiques suivantes, prises séparément ou en combinaison :
- la serrure comprend une structure d'entraînement configurée pour désactiver le moyen de maintien et pour déplacer l'embout de câble de la position de livraison à la position de fonctionnement ; et/ou
- la structure d'entraînement est une rampe du levier active lorsque le boitier est attaché au câble par l'intermédiaire des moyens d'attache ; et/ou
- les moyens d'attache comprennent d'une part un système d'attache par crochet à charnière rotative et d'autre part un système d'attache par clipsage,
   et le levier est configuré pour coopérer avec l'embout de câble lorsque le boitier est attaché au câble par l'intermédiaire du système d'attache par crochet à charnière rotative et du système d'attache par clipsage ; et/ou
- le câble et/ou le boitier comprend des moyens d'étanchéité de sorte que le câble cloisonne le boitier lorsque le câble est monté sur le boitier ; et/ou
- la serrure comprend un agencement de détrompage configuré pour fixer le boitier et le câble et associer le levier et l'embout de câble sans contrôle visuel ; et/ou
- l'agencement de détrompage comprend une forme en entonnoir prévue sur le boitier et empêche l'assemblage d'un câble de porte droite sur une serrure de porte gauche, et inversement.

L'invention porte également sur un ensemble d'ouverture et de verrouillage d'un ouvrant de véhicule automobile comportant une serrure pour ouvrir et verrouiller un ouvrant et un câble selon l'invention.

L'invention concerne en outre un véhicule automobile comprenant un ensemble d'ouverture et de verrouillage selon l'invention.

De préférence, le câble est monté de sorte à fermer une face inférieure du boitier en référence au véhicule automobile.

D'autres caractéristiques et avantages de l'invention apparaîtront à la lecture de la description suivante de modes de réalisation préférés de l'invention, donnés à titre d'exemples non limitatifs et en référence aux dessins annexés sur lesquels :
- la figure 1 est une vue dans l'espace d'un câble selon l'invention;
- la figure 2 est une vue de côté du câble de la figure 1 vu depuis la flèche A de la figure 1 ;
- la figure 3 est une vue de côté du câble de la figure 1 vu depuis la flèche B de la figure 1 ;
- les figures 4A à 4D représentent les étapes de montage d'un câble sur le boitier d'une serrure selon l'invention ;
- les figures 5A et 5B représentent une désactivation d'un moyen de maintien lors du montage de la serrure des figures 4A à 4D.

En se référant aux figures, la présente invention concerne un câble pour une serrure destinée à ouvrir et à verrouiller un ouvrant d'un véhicule automobile tel qu'une porte latérale ou un volet arrière. Le câble est globalement noté 1. Le câble 1 est un ensemble comprenant par exemple un câble d'ouverture 10 et un câble de verrouillage 20. La description ci-dessous est basée sur le câble d'ouverture 10. Le câble de verrouillage 20 a de préférence des caractéristiques identiques à celles du câble d'ouverture 10, sauf mention contraire.

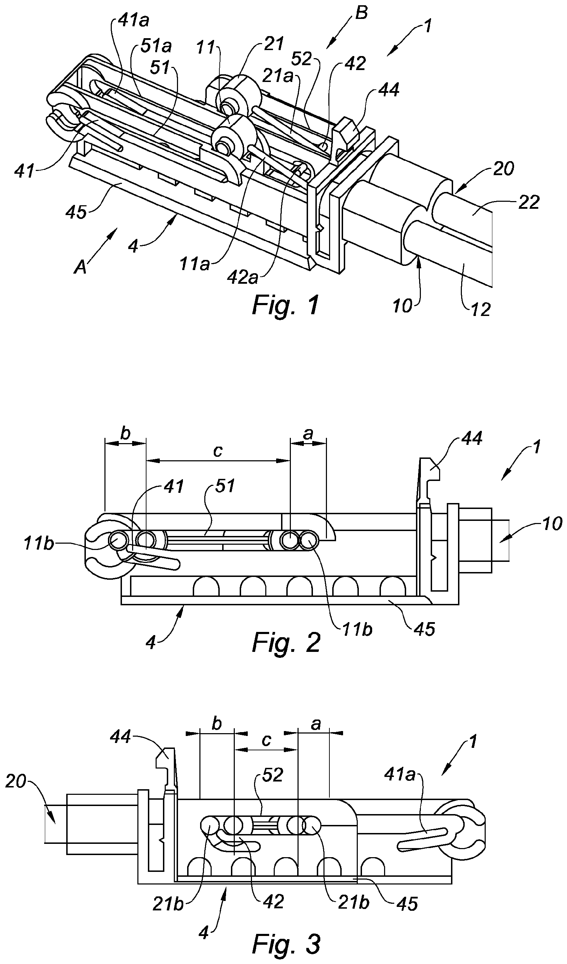

Comme on peut le voir sur les figures 1 à 3, le câble d'ouverture 10 comprend une gaine de câble 12 et un cœur de câble 11a logé mobile dans la gaine 12. Le cœur de câble 11a se termine par un embout de câble 11 à au moins une extrémité de la gaine, par exemple à l'extrémité de la gaine 12 sur la figure 1. De façon avantageuse, le cœur de câble 11a se termine par un embout de câble à chaque extrémité de la gaine 12. De préférence, le câble de verrouillage 20 comprend également une autre gaine 22 et un autre cœur de câble 21a.

Le câble 1 comprend en outre une pièce de montage 4 fixée à ladite extrémité de la gaine 12. La pièce de montage 4 loge l'embout de câble 11.

Selon l'invention, l'embout de câble 11 est monté mobile entre une position de livraison et une position de fonctionnement.

Dans la position de livraison, l'embout de câble 11 est disposé dans une zone de livraison b à une première distance de ladite extrémité de la gaine 12.

Dans la position de fonctionnement, l'embout de câble 11 est disposé dans une zone de fonctionnement c à une deuxième distance de ladite extrémité de la gaine 12.

La pièce de montage 4 comprend en outre un moyen de maintien 41 de l'embout de câble 11 dans la position de livraison.

Avantageusement, le câble 1 selon l'invention prévoit un maintien de l'embout de câble 11 dans la position de livraison, par le moyen de maintien 41. Le moyen de maintien 41 permet de préserver la position du câble 1 contre les vibrations subies lors du transport jusqu'à une chaine de construction.

En outre, une désactivation du moyen de maintien 41 permet d'associer le câble d'ouverture 10 au boîtier de la serrure en faisant coopérer l'embout de câble 11 et le levier correspondant, en particulier par un montage dit « en aveugle », à savoir sans avoir besoin de contrôle visuel pour associer l'embout de câble 11 au levier correspondant.

Le câble 1 selon l'invention présente donc un montage simplifié avec des coûts de montage limités.

De préférence, le moyen de maintien 41 est désactivé par déclipsage de sorte que l'embout de câble 11 peut être placé dans la position fonctionnement. Par « déclipsage » de deux éléments au moins partiellement couplés ensemble, on entend un déboîtement desdits éléments faisant intervenir une déformation plastique ou élastique, d'un sous-élément impliqué dans le couplage desdits éléments. Une déformation élastique permet un déclipsage réversible.

En particulier, le moyen de maintien 41 comprend un élément se déformant pour permettre à l'embout de câble 11 d'être déplacé de la position de livraison vers la position de fonctionnement.

Selon un mode de réalisation de l'invention, l'embout de câble 11 est en outre monté mobile vers ou depuis une position de montage dans laquelle l'embout de câble 11 est disposé dans une zone de montage a à une autre distance de ladite extrémité de la gaine 12, de sorte que la deuxième distance est comprise entre la première distance et l'autre distance.

En d'autres termes, la zone de montage a configurée de sorte que la zone de fonctionnement c est comprise entre la zone de montage *a* et la zone de livraison *b.* Avantageusement, cet agencement permet de garantir un assemblage facile de l'embout et sans risque de démontage à l'utilisation, notamment grâce à la position de la zone de montage à l'extérieur de la zone de fonctionnement.

De préférence, le moyen de maintien 41 retient l'embout de câble dans la position de livraison par clipsage. Par « clipsage » de deux éléments, on entend un emboîtement au moins partiel desdits éléments faisant intervenir une déformation, de préférence élastique, d'un sous-élément d'au moins un desdits éléments.

En particulier, le moyen de maintien 41 comprend un élément se déformant élastiquement pour disposer l'embout de câble 11 dans la position de livraison. Ledit élément reprenant sa forme initiale maintien l'embout de câble 11 dans la position de livraison.

Selon un mode de réalisation de l'invention, un moyen de maintien 41 comprend une lame de maintien. Avantageusement, ce mode de réalisation propose un moyen simple, efficace et à bas coût pour maintenir l'embout de câble dans la position de livraison. Le moyen de maintien 41 peut par exemple être obtenu par un moulage spécifique de la pièce de montage 4. La lame de maintien est de préférence la portion se déformant plastiquement ou élastiquement.

Selon un mode de réalisation de l'invention, l'embout de câble 11 est monté mobile en translation entre lesdites positions. De préférence, l'embout de câble 11 est monté mobile entre au moins deux desdites positions. Avantageusement, une translation est un mouvement simple de l'embout de câble liée à la traction du câble sans nécessiter de mécanisme complexe tel qu'une came.

Selon un mode de réalisation de l'invention, la pièce de montage 4 comprend un moyen de guidage 51 de l'embout de câble 11 dans la zone de fonctionnement c. Avantageusement, le moyen de guidage permet de maintenir une trajectoire constante de l'embout de câble 11 entre les différentes positions.

Selon un mode de réalisation de l'invention, le moyen de guidage 51 est un rail de guidage coopérant avec l'embout de câble 11. Le moyen de guidage 51 peut par exemple être obtenu par un moulage spécifique de la pièce de montage 4. En particulier, l'embout de câble 11 comprend au moins une structure de guidage 11b, par exemple un épaulement, coopérant avec le rail de guidage 51.

Selon un mode de réalisation de l'invention, le câble d'ouverture 10 est monté de sorte qu'en position de livraison, l'embout de câble 11 est disposé à une première distance supérieure à la deuxième distance de la position de fonctionnement. Cet agencement est mieux adapté à un câble d'ouverture.

Selon un mode de réalisation de l'invention, le câble de verrouillage 20 est monté de sorte qu'en position de livraison, l'embout de câble 21 est disposé à une première distance inférieure à la deuxième distance de la position de fonctionnement. Cet agencement est mieux adapté à un câble de verrouillage.

Selon un mode de réalisation de l'invention, le câble de verrouillage 20 configuré de sorte qu'un déplacement de l'embout de câble 21 permet de désactiver le moyen de maintien 42 et de déplacer l'embout de câble 21 de la position de livraison à la position de fonctionnement.

En particulier, l'embout de câble 21 et le moyen de maintien 42 sont configurés de telle sorte qu'une poussée exercée sur l'embout de câble 21 permet de le faire sortir de la position de livraison pour atteindre la position de fonctionnement. Cet agencement permet d'avoir un premier moyen simplifié et à bas coût, pour désactiver le moyen de maintien 42.

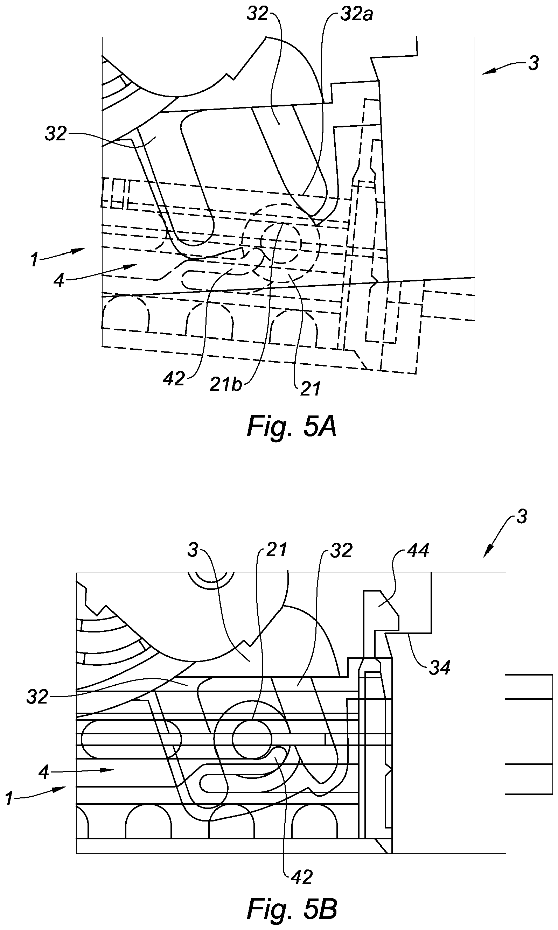

Plus particulièrement, comme on peut le voir sur les figures 5A et 5B les surfaces de l'embout de câble 21 et du moyen de maintien 42 comprennent au moins une partie circulaire et le moyen de maintien 42 comprend de préférence une portion coudée de sorte qu'une poussée exercée vers la gauche des figures 5A et 5B permet de déplacer le moyen de maintien vers le bas desdites figures et de faire glisser l'embout de câble 21 vers la position de fonctionnement. Cet agencement est particulièrement adapté à un câble de verrouillage, car l'embout de câble est moteur aussi bien en poussée qu'en tirée.

Selon un mode de réalisation de l'invention, le câble d'ouverture 10 est configuré de sorte qu'une traction du cœur de câble 11a permet de désactiver le moyen de maintien 41 et de déplacer l'embout de câble 11 de la position de livraison à la position de fonctionnement.

Cet agencement permet d'avoir un deuxième moyen simplifié et à bas coût, pour désactiver le moyen de maintien 41.

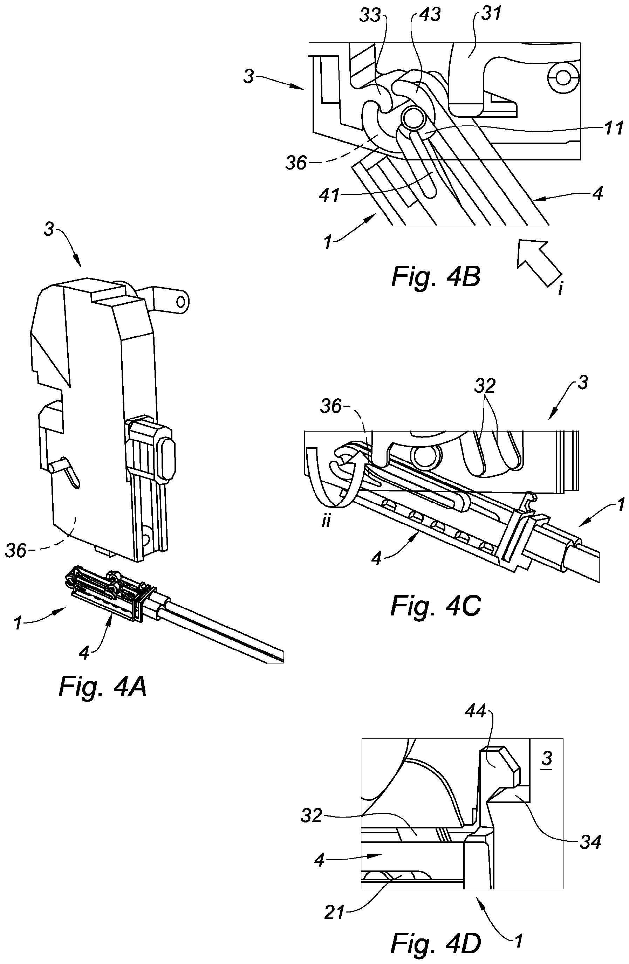

Plus particulièrement, comme on peut le voir sur les figures 4B et 4C l'embout de câble 11 monté à une certaine distance du levier 31 correspondant, l'association audit levier 31 se fait par traction du cœur de câble vers la droite des figures 4B et 4C. Cet agencement est particulièrement adapté à un câble d'ouverture, car l'embout de câble est initialement disposé à distance de l'embout de câble 11 et est destiné à s'en rapprocher, de préférence entrer en contact, pour atteindre la position de fonctionnement.

L'invention concerne en outre une serrure pour ouvrir et verrouiller un ouvrant d'un véhicule automobile comprenant un boîtier 3 destiné à recevoir le câble 1 selon l'invention.

Le boîtier 3 et le câble 1 comprennent des moyens d'attache détaillés notés 33, 43, 34 et 44 pour fixer le boitier 3 et le câble 1.

Selon un mode de réalisation de l'invention, le boîtier 3 comprend un levier d'ouverture 31 et de préférence un levier de verrouillage 32 configurés pour coopérer respectivement avec l'embout de câble 11 et l'embout de câble 21 lorsque le boitier est attaché au câble 1 par l'intermédiaire desdits moyens d'attache.

En particulier, le boîtier 3 comprend de préférence un premier 33 et un deuxième 34 moyens d'attache, et le câble 1 comprend un premier 43 et un deuxième 44 moyens d'attache configurés pour coopérer respectivement avec les moyens d'attache 33, 34 du boîtier 3.

Selon un mode de réalisation de l'invention, la serrure comprend une structure d'entraînement 32a configurée pour désactiver le moyen de maintien 42 et pour déplacer l'embout de câble 21 de la position de livraison à la position de fonctionnement.

Selon un mode de réalisation de l'invention, illustré aux figures 5A et 5B, la structure d'entraînement 32a est une rampe du levier de verrouillage 32 active lorsque le boitier est attaché au câble 1 par l'intermédiaire desdits moyens d'attache.

Selon un mode de réalisation de l'invention, les moyens d'attache comprennent d'une part un système d'attache par crochet à charnière rotative 33, 43 et d'autre part un système d'attache par clipsage 34, 44.

En outre, le levier d'ouverture 31 et de préférence le levier de verrouillage 32 sont configurés pour coopérer respectivement avec l'embout de câble 11 et l'embout de câble 21 lorsque le boitier 3 est attaché au câble 1 par l'intermédiaire du système d'attache par crochet à charnière rotative 33, 43 et du système d'attache par clipsage 34, 44.

Ainsi, de préférence, les premiers moyens d'attache comprennent le crochet à charnière rotative 33, 43. Selon une variante préférée, le câble 1 comprend la structure mâle du crochet à charnière rotative et le boîtier 3 en comprend la structure femelle. Une variante inverse peut être envisagée.

En outre, de préférence, les deuxièmes moyens d'attache comprennent le système d'attache par clipsage 34, 44. De préférence, le câble 1 comprend une protubérance de clipsage de ladite structure d'attache, et le boîtier 3 en comprend un relief de clipsage recevant ladite protubérance de clipsage comme on peut le voir sur la figure 4D. Une variante inverse peut être envisagée.

Selon un mode de réalisation de l'invention, le câble 1 et/ou le boitier 3 comprend des moyens d'étanchéité 45 de sorte que le câble 1 cloisonne le boitier 3 lorsque le câble 1 est monté sur le boitier 3. Cet agencement permet de protéger les mécanismes à l'intérieur du boîtier des conditions extérieures. Les moyens d'étanchéité 45 peuvent comprendre au moins un joint prévu sur le câble 1, en particulier sur la pièce de montage 4.

Selon un mode de réalisation de l'invention, la serrure comprend un agencement de détrompage 36 configuré pour fixer le boitier 3 et le câble 1 et associer le levier d'ouverture 31 et de préférence le levier de verrouillage 32 et respectivement l'embout de câble 11 et l'embout de câble 21.

Selon un mode de réalisation de l'invention, l'agencement de détrompage 36 comprend une forme en entonnoir prévue sur le boitier. En particulier, la forme en entonnoir est ouverte et élargie vers le bas des figures 4A à 4D de sorte qu'une insertion du câble 1 vers le haut desdites figures, permet de placer le câble 1 dans la position requise sans besoin de contrôle visuel.

L'agencement de détrompage 36 est de préférence asymétrique et permet d'empêcher le montage d'un câble de porte droite sur une serrure de porte gauche et réciproquement.

L'invention porte en outre sur un ensemble d'ouverture et de verrouillage d'un ouvrant de véhicule automobile comportant une serrure pour ouvrir et verrouiller un ouvrant et un câble 1 selon l'invention. En particulier la serrure de l'ensemble est également une serrure selon l'invention.

L'invention concerne également un véhicule automobile comprenant un ensemble d'ouverture et de verrouillage selon l'invention.

De préférence, le câble 1 est monté de sorte à fermer une face inférieure du boitier 3 en référence au véhicule automobile. Cet aspect augmente la protection de la serrure à l'intrusion d'eau dans la serrure.

Le montage du câble 1 sera maintenant décrit en référence aux figures 4A à 5B.

En substance, le montage du câble 1 dans la serrure comprend un premier montage *i* des premiers moyens d'attache 33, 43 puis un deuxième montage *ii* des deuxièmes moyens d'attache 34, 44.

De préférence, lors du premier montage *i*, illustré à la figure 4B, les premiers moyens d'attache 33, 43 sont associés ensemble, en particulier la structure male est insérée dans la structure femelle du crochet à charnière rotative. La charnière est ensuite pivotée pour fixer le câble à la serrure.

En outre, de préférence, lors du deuxième montage *ii,* illustré à la figure 4C, les deuxièmes moyens d'attache 34, 44 sont associés ensemble, en particulier la protubérance du système d'attache par clipsage est associée au relief de clipsage comme on peut le voir sur la figure 4D.

Selon l'invention, le pivotement de la charnière permet d'associer les deuxièmes moyens d'attache 34, 44, en particulier du système d'attache par clipsage comme on peut le voir sur les figures 4C et 4D. Le deuxième montage *ii* comprend donc le pivotement de la charnière dans une variante préférée, ce qui permet un montage rapide.

En outre, le positionnement des leviers 31, 32 dans le boîtier 3 permet leur association avec les embouts de câble 11, 12 respectifs, ce qui permet un montage sans contrôle visuel.

Ainsi, comme on peut le voir sur les figures 5A et 5B, le montage du câble 1 dans le boîtier 3 permet au levier de verrouillage 32 comprenant la structure d'entraînement 32a de déplacer l'embout de câble 21 vers la position de fonctionnement tout en associant ledit embout de câble 21 audit levier de verrouillage 32.

En outre, le montage du câble 1 dans le boîtier 3 permet de positionner l'embout de câble 11 près du levier d'ouverture 31 de sorte qu'une traction du cœur de câble 11a permet d'associer ledit embout de câble audit levier d'ouverture 31.

Cet agencement permet l'association des embouts de câble 11, 21 aux leviers correspondants 31, 32 sans contrôle visuel.

L'invention a été décrite en référence aux figures annexée en particulier pour un câble 1 comprenant de préférence un câble d'ouverture et un câble de verrouillage. Bien entendu, l'invention couvre également un système dans lequel seul le câble d'ouverture ou le câble de verrouillage est tel que décrit précédemment.

L'invention a été décrite en référence à différents modes de réalisation. Bien entendu, les modes de réalisation de l'invention sont compatibles les uns avec les autres.

Dans les revendications, le mot « comprenant » n'exclut pas d'autres éléments ou étapes, et l'article indéfini « un » ou « une » n'exclut pas une pluralité. Le simple fait que différentes caractéristiques soient citées dans différentes revendications dépendantes n'indique pas qu'une combinaison de ces caractéristiques ne peut être avantageusement envisagée. Tout signe de référence dans les revendications ne doit pas être interprété comme limitant la portée de l'invention.

## Revendications

1. Câble (1) pour une serrure destinée à ouvrir et à verrouiller un ouvrant d'un véhicule automobile, le câble (1) comprenant une gaine de câble (12, 22) et un cœur de câble (11a, 21a) logé mobile dans la gaine (12, 22), le cœur de câble (11a, 21a) se terminant par un embout de câble (11, 21) à au moins une extrémité de la gaine (12, 22),
le câble comprenant en outre une pièce de montage (4) fixée à ladite extrémité de la gaine (12, 22), la pièce de montage (4) logeant l'embout de câble (11, 21),
dans lequel l'embout de câble (11, 21) est monté mobile entre
- une position de livraison dans laquelle l'embout de câble (11, 21) est disposé dans une zone de livraison (*b*) à une première distance de ladite extrémité de la gaine (12, 22), et
- une position de fonctionnement dans laquelle l'embout de câble (11, 21) est disposé dans une zone de fonctionnement (*c*) à une deuxième distance de ladite extrémité de la gaine (12, 22),
et dans lequel la pièce de montage (4) comprend en outre un moyen de maintien (41, 42) de l'embout de câble (11, 21) dans la position de livraison.

2. Câble (1) selon la revendication précédente, dans lequel l'embout de câble (11, 21) est en outre monté mobile vers ou depuis une position de montage dans laquelle l'embout de câble (11, 21) est disposé dans une zone de montage (*a*) à une autre distance de ladite extrémité de la gaine (12, 22), de sorte que la deuxième distance est comprise entre la première distance et l'autre distance.

3. Câble (1) selon l'une des revendications précédentes, dans lequel le moyen de maintien (41, 42) comprend une lame de maintien.

4. Câble (1) selon l'une des revendications précédentes, dans lequel l'embout de câble (11, 21) est monté mobile en translation entre lesdites positions.

5. Câble (1) selon l'une des revendications précédentes, dans lequel la pièce de montage (4) comprend un moyen de guidage (51, 52) de l'embout de câble dans la zone de fonctionnement (*c*).

6. Câble (1) selon l'une des revendications précédentes, dans lequel le moyen de guidage (51, 52) est un rail de guidage coopérant avec l'embout de câble (11, 21).

7. Câble (1) selon l'une des revendications précédentes, dans lequel le câble (1) est monté de sorte qu'en position de livraison, l'embout de câble (11) est disposé à une première distance supérieure à la deuxième distance de la position de fonctionnement.

8. Câble (1) selon l'une des revendications précédentes, dans lequel le câble (1) est monté de sorte qu'en position de livraison, l'embout de câble (21) est disposé à une première distance inférieure à la deuxième distance de la position de fonctionnement.

9. Câble (1) selon l'une des revendications précédentes, dans lequel le câble (1) est configuré de sorte qu'un déplacement de l'embout de câble (21) permet de désactiver le moyen de maintien (42) et de déplacer l'embout de câble (21) de la position de livraison à la position de fonctionnement.

10. Câble (1) selon l'une des revendications précédentes, dans lequel le câble (1) est configuré de sorte qu'une traction du cœur de câble (11a) permet de désactiver le moyen de maintien (41) et de déplacer l'embout de câble (11) de la position de livraison à la position de fonctionnement.

11. Serrure pour ouvrir et verrouiller un ouvrant d'un véhicule automobile comprenant un boîtier (3) recevant le câble (1) selon l'une des revendications précédentes,
le boîtier (3) et le câble (1) comprenant des moyens d'attache (33, 43, 34, 44) pour fixer le boitier et le câble (1),
le boîtier (3) comprenant un levier (31, 32) configuré pour coopérer avec l'embout de câble (11, 21) lorsque le boitier est attaché au câble (1) par l'intermédiaire des moyens d'attache (33, 43, 34, 44).

12. Serrure selon la revendication précédente, comprenant une structure d'entraînement (32a) configurée pour désactiver le moyen de maintien (42) et pour déplacer l'embout de câble (21) de la position de livraison à la position de fonctionnement.

13. Serrure selon la revendication précédente, dans laquelle la structure d'entraînement (32a) est une rampe du levier (32) active lorsque le boitier est attaché au câble (1) par l'intermédiaire des moyens d'attache (33, 43, 34, 44).

14. Serrure selon l'une des revendications 11 à 13, dans laquelle les moyens d'attache (33, 43, 34, 44) comprennent d'une part un système d'attache par crochet à charnière rotative (33, 43) et d'autre part un système d'attache par clipsage (34, 44),
et dans laquelle le levier (31, 32) est configuré pour coopérer avec l'embout de câble (11, 21) lorsque le boitier (3) est attaché au câble (1) par l'intermédiaire du système d'attache par crochet à charnière rotative (33, 43) et du système d'attache par clipsage (34, 44).

15. Serrure selon l'une des revendications 11 à 14, dans laquelle le câble (1) et/ou le boitier comprend des moyens d'étanchéité (45) de sorte que le câble (1) cloisonne le boitier (3) lorsque le câble (1) est monté sur le boitier (3).

## Patentansprüche

1. Kabel (1) für ein Schloss, das dazu bestimmt ist, eine Tür eines Kraftfahrzeugs zu öffnen und zu verriegeln, wobei das Kabel (1) einen Kabelmantel (12, 22) und einen Kabelkern (11a, 21a) umfasst, der beweglich in dem Mantel (12, 22) untergebracht ist, wobei der Kabelkern (11a, 21a) an mindestens einem Ende des Mantels (12, 22) mit einem Kabelendstück (11, 21) abschließt,
wobei das Kabel weiter ein Befestigungsteil (4) umfasst, das an dem Ende des Mantels (12, 22) fixiert ist, wobei das Befestigungsteil (4) das Kabelendstück (11, 21) unterbringt,
wobei das Kabelendstück (11, 21) beweglich befestigt ist zwischen
- einer Lieferposition, in der das Kabelendstück (11, 21) in einer Lieferzone (b) in einem ersten Abstand zu dem Ende des Mantels (12, 22) angeordnet ist, und
- einer Betriebsposition, in der das Kabelendstück (11, 21) in einer Betriebszone (c) in einem zweiten Abstand zu dem Ende des Mantels (12, 22) angeordnet ist,
und wobei das Befestigungsteil (4) weiter ein Haltemittel (41, 42) des Kabelendstücks (11, 21) in der Lieferposition umfasst.

2. Kabel (1) nach dem vorstehenden Anspruch, wobei das Kabelendstück (11, 21) weiter in eine oder aus einer Befestigungsposition beweglich befestigt ist, in der das Kabelendstück (11, 21) in einer Befestigungszone *(a)* in einem anderen Abstand zu dem Ende des Mantels (12, 22) angeordnet ist, sodass der zweite Abstand zwischen dem ersten Abstand und dem anderen Abstand enthalten ist.

3. Kabel (1) nach einem der vorstehenden Ansprüche, wobei das Haltemittel (41, 42) eine Halteleiste umfasst.

4. Kabel (1) nach einem der vorstehenden Ansprüche, wobei das Kabelendstück (11, 21) translationsbeweglich zwischen den Positionen befestigt ist.

5. Kabel (1) nach einem der vorstehenden Ansprüche, wobei das Befestigungsteil (4) ein Führungsmittel (51, 52) des Kabelendstücks in der Betriebszone *(c)* umfasst.

6. Kabel (1) nach einem der vorstehenden Ansprüche, wobei das Führungsmittel (51, 52) eine Führungsschiene ist, die mit dem Kabelendstück (11, 21) zusammenwirkt.

7. Kabel (1) nach einem der vorstehenden Ansprüche, wobei das Kabel (1) derart befestigt ist, dass das Kabelendstück (11) in Lieferposition in einem ersten Abstand größer als der zweite Abstand von der Betriebsposition angeordnet ist.

8. Kabel (1) nach einem der vorstehenden Ansprüche, wobei das Kabel (1) derart befestigt ist, dass das Kabelendstück (21) in Lieferposition in einem ersten Abstand kleiner als der zweite Abstand von der Betriebsposition angeordnet ist.

9. Kabel (1) nach einem der vorstehenden Ansprüche, wobei das Kabel (1) derart konfiguriert ist, dass eine Verschiebung des Kabelendstücks (21) erlaubt, das Haltemittel (42) zu deaktivieren, und das Kabelendstück (21) von der Lieferposition in die Betriebsposition zu verschieben.

10. Kabel (1) nach einem der vorstehenden Ansprüche, wobei das Kabel (1) derart konfiguriert ist, dass ein Ziehen des Kabelkerns (11a) erlaubt, das Haltemittel (41) zu deaktivieren und das Kabelendstück (11) von der Lieferposition in die Betriebsposition zu verschieben.

11. Schloss zum Öffnen und Verriegeln einer Tür eines Kraftfahrzeugs, umfassend ein Gehäuse (3), welches das Kabel (1) nach einem der vorstehenden Ansprüche aufnimmt,
wobei das Gehäuse (3) und das Kabel (1) Verbindungsmittel (33, 43, 34, 44) zum Fixieren des Gehäuses und des Kabels (1) umfassen,
wobei das Gehäuse (3) einen Hebel (31, 32) umfasst, der konfiguriert ist, um mit dem Kabelendstück (11, 21) zusammenzuwirken, wenn das Gehäuse anhand der Verbindungsmittel (33, 43, 34, 44) mit dem Kabel (1) verbunden ist.

12. Schloss nach dem vorstehenden Anspruch, umfassend eine Antriebsstruktur (32a), die konfiguriert ist, um das Haltemittel (42) zu deaktivieren und um das Kabelendstück (21) von der Lieferposition in die Betriebsposition zu verschieben.

13. Schloss nach dem vorstehenden Anspruch, wobei die Antriebsstruktur (32a) eine aktive Rampe des Hebels (32) ist, wenn das Gehäuse anhand der Verbindungsmittel (33, 43, 34, 44) mit dem Kabel (1) verbunden ist.

14. Schloss nach einem der Ansprüche 11 bis 13, wobei die Verbindungsmittel (33, 43, 34, 44) einerseits ein Verbindungssystem durch Haken mit Drehscharnier (33, 43), und andererseits ein Verbindungssystem durch Kopplung (34, 44) umfassen,
und wobei der Hebel (31, 32) konfiguriert ist, um mit dem Kabelendstück (11, 21) zusammenzuwirken, wenn das Gehäuse (3) anhand des Verbindungssystems durch Haken mit Drehscharnier (33, 43) und des Verbindungssystems durch Kopplung (34, 44) mit dem Kabel (1) verbunden ist.

15. Schloss nach einem der Ansprüche 11 bis 14, wobei das Kabel (1) und/oder das Gehäuse Dichtmittel (45) umfasst, sodass das Kabel (1) das Gehäuse (3) unterteilt, wenn das Kabel (1) auf dem Gehäuse (3) befestigt ist.

## Claims

1. A cable (1) for a latch configured to open and lock a door leaf of a motor vehicle, the cable (1) comprising a cable sheath (12, 22) and a cable core (11a, 21a) movably housed within the sheath (12, 22), the cable core (11a, 21a) terminating in a cable end-piece (11, 21) at least at one end of the sheath (12, 22),
the cable further comprising a mounting part (4) fastened to said end of the sheath (12, 22), the mounting part (4) housing the cable end-piece (11, 21),
wherein the cable end-piece (11, 21) is movably mounted between
- a delivery position in which the cable end-piece (11, 21) is disposed in a delivery area (*b*) at a first distance from said end of the sheath (12, 22), and
- an operating position in which the cable end-piece (11, 21) is disposed in an operating area (*c*) at a second distance from said end of the sheath (12, 22),
and wherein the mounting part (4) further comprises a holding means (41, 42) for the cable end-piece (11, 21) in the delivery position.

2. The cable (1) according to the preceding claim, wherein the cable end-piece (11, 21) is further movably mounted towards or from a mounting position in which the cable end-piece (11, 21) is disposed in a mounting area (*a*) at another distance from said end of the sheath (12, 22), so that the second distance is comprised between the first distance and the other distance.

3. The cable (1) according to any of the preceding claims, wherein the holding means (41, 42) comprises a holding blade.

4. The cable (1) according to any of the preceding claims, wherein the cable end-piece (11, 21) is movably mounted in translation between said positions.

5. The cable (1) according to any of the preceding claims, wherein the mounting part (4) comprises a guiding means (51, 52) for the cable end-piece in the operating area (*c*).

6. The cable (1) according to any of the preceding claims, wherein the guiding means (51, 52) is a guide rail cooperating with the cable end-piece (11, 21).

7. The cable (1) according to any of the preceding claims, wherein the cable (1) is mounted so that in the delivery position, the cable end-piece (11) is disposed at a first distance larger than the second distance of the operating position.

8. The cable (1) according to any of the preceding claims, wherein the cable (1) is mounted so that, in the delivery position, the cable end-piece (21) is disposed at a first distance smaller than the second distance of the operating position.

9. The cable (1) according to any of the preceding claims, wherein the cable (1) is configured so that a displacement of the cable end-piece (21) allows deactivating the holding means (42) and displacing the cable end-piece (21) from the delivery position to the operating position.

10. The cable (1) according to any of the preceding claims, wherein the cable (1) is configured so that a traction of the cable core (11a) allows deactivating the holding means (41) and displacing the cable end-piece (11)from the delivery position to the operating position.

11. A latch for opening and locking a door leaf of a motor vehicle comprising a case (3) receiving the cable (1) according to any of the preceding claims,
the case (3) and the cable (1) comprising attachment means (33, 43, 34, 44) for fastening the case and the cable (1),
the case (3) comprising a lever (31, 32) configured to cooperate with the cable end-piece (11, 21) when the case is attached to the cable (1) via the attachment means (33, 43, 34, 44).

12. The latch according to the preceding claim, comprising a drive structure (32a) configured to deactivate the holding means (42) and to displace the cable end-piece (21) from the delivery position to the operating position.

13. The latch according to the preceding claim, wherein the drive structure (32a) is a ramp of the lever (32) which is active when the case is attached to the cable (1) via the attachment means (33, 43, 34, 44).

14. The latch according to any of claims 11 to 13, wherein the attachment means (33, 43, 34, 44) comprise, on the one hand, a rotary hinge hook attaching system (33, 43) and, on the other hand, a clipping attaching system (34, 44),
and wherein the lever (31, 32) is configured to cooperate with the cable end-piece (11, 21) when the case (3) is attached to the cable (1) via the rotary hinge hook attaching system (33, 43) and the clipping attaching system (34, 44).

15. The latch according to any of claims 11 to 14, wherein the cable (1) and/or the case comprises sealing means (45) so that the cable (1) partitions the case (3) when the cable (1) is mounted on the case (3).
